(19) Europäisches Patentamt / European Patent Office / Office européen des brevets

(11) **EP 3 021 632 B1**

(12) **EUROPEAN PATENT SPECIFICATION**

(45) Date of publication and mention
of the grant of the patent:
**04.09.2019 Bulletin 2019/36**

(21) Application number: **14835103.4**

(22) Date of filing: **17.07.2014**

(51) Int Cl.:
**H04W 72/12** (2009.01)

(86) International application number:
**PCT/CN2014/082371**

(87) International publication number:
**WO 2015/018269 (12.02.2015 Gazette 2015/06)**

(54) **COOPERATIVE SCHEDULING METHOD, DEVICE AND SYSTEM BASED ON INTERFERENCE CANCELLATION**

KOOPERATIVES PLANUNGSVERFAHREN, VORRICHTUNG UND SYSTEM AUF DER BASIS VON INTERFERENZUNTERDRÜCKUNG

PROCÉDÉ, DISPOSITIF ET SYSTÈME DE PLANIFICATION COOPÉRATIVE BASÉS SUR UNE ANNULATION DE BROUILLAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.08.2013 CN 201310343870**

(43) Date of publication of application:
**18.05.2016 Bulletin 2016/20**

(73) Proprietor: **Huawei Technologies Co., Ltd.
Longgang District
Shenzhen, Guangdong 518129 (CN)**

(72) Inventors:
• **TIE, Xiaolei
Shenzhen
Guangdong 518129 (CN)**
• **HUA, Meng
Shenzhen
Guangdong 518129 (CN)**

(74) Representative: **Pfenning, Meinig & Partner mbB
Patent- und Rechtsanwälte
Theresienhöhe 11a
80339 München (DE)**

(56) References cited:
WO-A2-2009/120048          CN-A- 102 638 805
CN-A- 102 792 627          CN-A- 102 811 458
US-A1- 2006 013 338          US-A1- 2009 312 042
US-A1- 2012 026 955          US-A1- 2012 057 484

**Description**

**TECHNICAL FIELD**

Embodiments of the present invention relate to the field of communications technologies, and in particular, to a method for coordinated scheduling based on interference cancellation, an apparatus, and a system.

**BACKGROUND**

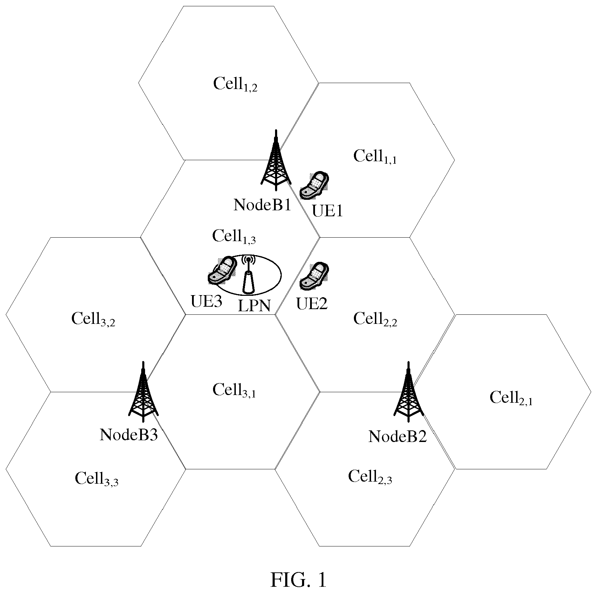

In an existing high speed downlink packet access (HSDPA) system, there is no soft handover in a downlink for the HSDPA, and as a result, when a base station of a neighboring cell schedules user equipment (UE) of the neighboring cell, a downlink signal sent by the base station of the neighboring cell to the UE of the neighboring cell becomes neighboring cell interference to UE of a current cell. Victim IC UE is used to indicate the UE interfered by the neighboring cell, and Interfering UE indicates UE whose downlink signal interferes with victim IC UE. FIG. 1 is a schematic diagram of three typical interference scenarios. As shown in FIG. 1, there are mainly the following three typical interference scenarios:

First, a scenario of interference between macro cells: (1) An interfering cell and a serving cell belong to a same macro base station, for example, for UE1 in FIG. 1, a serving cell of the UE1 is a $cell_{1,1}$, and the UE1 is located in a border area between the $cell_{1,1}$ and a $cell_{1,3}$ that are of a same base station (NodeBI). Therefore, dominant neighboring cell interference comes from the $cell_{1,3}$ that is of the same base station as that of the serving cell; (2) An interfering cell and a serving cell do not belong to a same macro base station, for example, for UE2 in FIG. 1, a serving cell of the UE2 is a $cell_{2,2}$, and the UE2 is located in a border area between different cells (the $cell_{2,2}$ and a $cell_{1,3}$) that are of different base stations. Therefore, dominant neighboring cell interference comes from the $cell_{1,3}$ that is not of the same base station as that of the serving cell.

Second, a scenario of interference between a macro cell and a micro cell: for example, for UE3 in FIG. 1, a serving cell of the UE3 is a cell of a low power node (LPN), and the LPN is also located in coverage of the $cell_{1,3}$ of a macro base station. Therefore, for the UE3, dominant neighboring cell interference to the UE3 comes from the $cell_{1,3}$ of the macro base station.

To eliminate interfering signals from the foregoing neighboring cells, there are two types of interference cancellation (IC) receivers in the prior art. One type is a decoding-based interference cancellation receiver (Post-decoding IC UE), an interference cancellation process for this type of receiver is that: UE (Victim IC UE) on which interference cancellation is performed practically demodulates and decodes an interfering transport block of a macro base station; and after the decoding, if cyclic redundancy check (CRC) check of neighboring cell interference is correct, the Victim IC UE reconstructs an interfering signal of the macro base station, and after eliminating the interfering signal, demodulates and decodes a signal of a current cell. The other type is a pre-decoding interference cancellation receiver (Pre-decoding IC UE), and an interference cancellation process for this type of receiver is that: an interfering signal is despread or demodulated according to a modulation scheme, and then the interfering signal is reconstructed; and after the interfering signal is eliminated, a signal of a current cell is decoded.

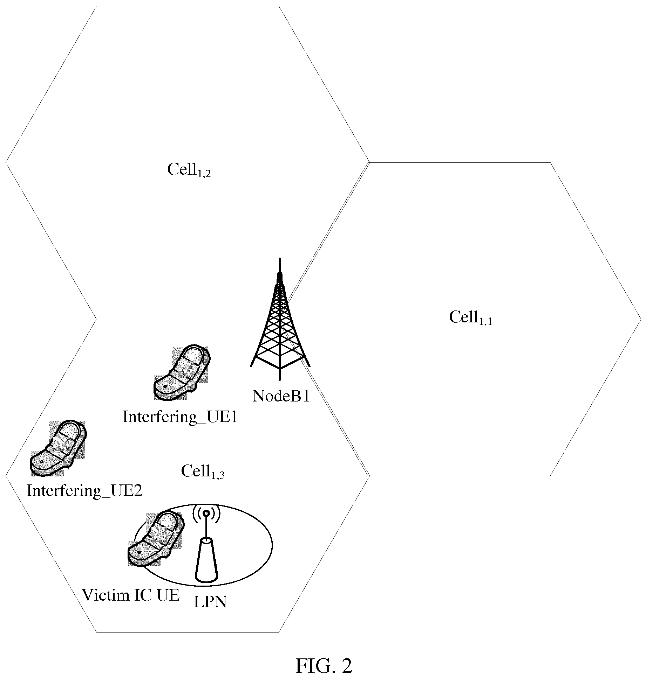

However, the IC efficiency of the foregoing two types of interference cancellation receivers in the prior art is not high. The Post-decoding IC UE is used as an example; the IC efficiency of Post-decoding IC relies to a great extent on whether the Victim IC UE can decode an interfering signal of an interfering neighboring cell (Interfering UE). A scenario of the interference between a macro cell and a micro cell is used as an example; FIG. 2 is a schematic diagram in which UE eliminates interference in the scenario of interference between a macro cell and a micro cell. As shown in FIG. 2, a Victim IC UE is located in coverage of an LPN, and is also located in a $cell_{1,3}$ of a NodeBI, and in the $cell_{1,3}$ in coverage of the NodeBI, there are two interfering UEs: Interfering UE1 and Interfering UE2, where the Interfering UE1 is close to the NodeBI, and the $cell_{1,3}$ is the strongest interfering neighboring cell of the Victim IC UE. If the $cell_{1,3}$ schedules the Interfering_UEI, because in the $cell_{1,3}$, the Interfering_UEI is near-field UE, and a channel quality indicator (CQI) of the Interfering_UEI that is fed back by the Interfering_UEI is relatively high, a transport block (TB) scheduled by the $cell_{1,3}$ for the Interfering_UEI is relatively large in all probability. If a signal-to-interference-noise ratio (SINR) of the Interfering_UEI is greater than an SINR of the Victim IC UE, a probability that decoding is performed correctly for a SINR value of the Victim IC UE in the interfering cell is very low. In this case, actually it is very difficult for the Victim IC UE to completely obtain a gain of the Post-decoding IC. Therefore, the IC efficiency of the Post-decoding IC is very low. However, a CQI fed back by the Interfering_UE2, which is far-field UE, is usually relatively low, and a value of the SINR, in an interfering cell, of the Victim IC UE can support a data block of interfering UE to get correctly decoded. For the Pre-decoding IC UE, similar to the case shown in FIG. 2, a modulation scheme and a code channel quantity of a transmit signal of interfering UE vary according to a distance from the interfering UE to a macro base station; and correspondingly, as a modulation scheme and a code channel quantity are different, the IC efficiency also becomes different. Therefore, if UE for which higher order modulation is performed and a pre-decoding IC UE are scheduled together, a problem that the interference cancellation efficiency of the pre-decoding IC UE is relatively low is caused.

US 2012/026955 A discloses using interference cancelling capability information fed back from each mobile terminal apparatus, selecting a set of mobile terminal apparatuses whose interference can be cancelled from, when a plurality of radio base station apparatuses, and performing joint scheduling for the selected set of mobile terminal apparatuses.

## SUMMARY

The present invention is as defined in the appended independent claims. Further implementations are disclosed in the appended dependent claims, description and figures. Embodiments of the present invention provide a method for coordinated scheduling based on interference cancellation, an apparatus, and a system, to improve the interference cancellation efficiency of an interference cancellation receiver.

According to a first aspect, an embodiment of the present invention provides a method for coordinated scheduling based on interference cancellation, including:

generating, by user equipment UE, a first quality indicator of a channel from an interfering cell of the UE to the UE; and
feeding back, by the UE, the first quality indicator to a first base station to which the interfering cell belongs, and/or feeding back the first quality indicator to a second base station to which a serving cell of the UE belongs, to enable the first base station and/or the second base station to select, according to the first quality indicator, interfering UE that is to be scheduled together with the UE, schedule, in the serving cell of the UE, the UE, and simultaneously schedule, in a serving cell of the interfering UE, the interfering UE, where
the serving cell of the interfering UE is the interfering cell of the UE, and the interfering UE refers to that: a signal transmitted by the serving cell of the interfering UE interferes with the UE.

In a first possible implementation manner of the first aspect, the first quality indicator includes:

a signal-to-noise ratio SNR; or
a channel quality indicator CQI; or
a transport block size TBS that enables a channel to support demodulation and decoding.

With reference to the first aspect or the first possible implementation manner of the first aspect, in a second possible implementation manner of the first aspect, the generating, by user equipment UE, a first quality indicator of a channel from an interfering cell of the UE to the UE includes:
performing, by the UE, estimation according to a pilot channel of the interfering cell, to obtain the first quality indicator.

With reference to the method according to any one of the first aspect to the second possible implementation manner of the first aspect, in a third possible implementation manner of the first aspect, the first base station and the second base station are a same base station; or
the first base station and the second base station are connected to each other by using a low-delay link; or
the first base station is a macro base station, and the second base station is a micro base station.

According to a second aspect, an embodiment of the present invention provides a method for coordinated scheduling based on interference cancellation, including: receiving, by a base station, a first quality indicator that is fed back by user equipment UE and that is of a channel from an interfering cell of the UE to the UE;
selecting, by the base station according to the first quality indicator, interfering UE that is to be scheduled together with the UE; and
scheduling, in a serving cell of the UE by the base station, the UE, and simultaneously scheduling, in a serving cell of the interfering UE, the interfering UE, where
the interfering cell of the UE and the serving cell of the UE belong to a same base station, or belong to two different base stations, wherein a low-delay link exists between the two base stations, where
the serving cell of the interfering UE is the interfering cell of the UE, and the interfering UE refers to that: a signal transmitted by the serving cell of the interfering UE interferes with the UE.

In a first possible implementation manner of the second aspect, the first quality indicator includes:

a signal-to-noise ratio SNR; or
a channel quality indicator CQI; or
a transport block size TBS that enables a channel to support demodulation and decoding.

With reference to the second aspect or the first possible implementation manner of the second aspect, in a second possible implementation manner of the second aspect, before the selecting, by the base station according to the first quality indicator, interfering UE that is to be scheduled together with the UE, the method further includes:

receiving, by the base station, second quality indicators that are fed back by multiple interfering UEs and that are of channels from a serving cell of the multiple interfering UEs to the interfering UEs; and

the selecting, by the base station according to the first quality indicator, interfering UE that is to be scheduled together with the UE includes:

selecting, by the base station according to the received first quality indicator and the second quality indicators that are fed back by the multiple interfering UEs, the interfering UE that meets the following formula (1):

$$\text{the second quality indicator} \leq \text{the first quality indicator} + \text{DELTA} \qquad (1),$$

where

the DELTA is a parameter that is preset in a protocol or that is notified by the base station.

According to a third aspect, an embodiment of the present invention provides a method for coordinated scheduling based on interference cancellation, including:

receiving, by a micro base station, configuration information sent by a network side, where the configuration information includes a resource restricted subframe RRS scheduling pattern;

receiving, by the micro base station, a first quality indicator that is fed back by user equipment UE of the micro base station and that is of a channel from an interfering cell of the UE of the micro base station to the UE of the micro base station; and

scheduling, in N RRS subframes in the RRS scheduling pattern by the micro base station, the UE of the micro base station according to the configuration information, where

the UE of the micro base station refers to UE that uses the micro base station as a serving base station.

In a first possible implementation manner of the third aspect, the configuration information further includes a first quality indicator threshold, and the scheduling, in N RRS subframes in the RRS scheduling pattern by the micro base station, the UE of the micro base station according to the configuration information includes:

preferentially scheduling, by the micro base station according to the configuration information in the N RRS subframes in the RRS scheduling pattern, UE that is of the micro base station and whose first quality indicator is greater than the first quality indicator threshold.

With reference to the third aspect or the first possible implementation manner of the third aspect, in a second possible implementation manner of the third aspect, the first quality indicator includes:

a signal-to-noise ratio SNR; or

a channel quality indicator CQI; or

a transport block size TBS that enables a channel to support demodulation and decoding.

According to a fourth aspect, an embodiment of the present invention provides a method for coordinated scheduling based on interference cancellation, including:

receiving, by a macro base station, configuration information sent by a network side, where the configuration information includes a resource restricted subframe RRS scheduling pattern and a second quality indicator threshold;

receiving, by the macro base station, a second quality indicator that is fed back by UE of the macro base station and that is of a channel from a serving cell of the UE of the macro base station to the UE of the macro base station; and

preferentially scheduling, by the macro base station according to the configuration information in the N RRS subframes in the RRS scheduling pattern, the UE that is of the macro base station and whose second quality indicator is less than the second quality indicator threshold, where

the UE of the macro base station refers to UE that uses the macro base station as a serving base station.

In a first possible implementation manner of the fourth aspect, the second quality indicator includes:

a signal-to-noise ratio SNR; or

a channel quality indicator CQI; or

a transport block size TBS that enables a channel to support demodulation and decoding.

With reference to the fourth aspect or the first possible implementation manner of the fourth aspect, in a second possible implementation manner of the fourth aspect, if the UE that is of the macro base station and whose second quality indicator is less than the second quality indicator threshold does not exist, the macro base station performs, in the N RRS subframes, any one of the following scheduling:

scheduling in which a transport block size TBS is limited; or
scheduling in which a modulation scheme is limited; or
scheduling in which a code channel quantity is limited; or
any scheduling.

With reference to the method according to any one of the fourth aspect to the second possible implementation manner of the fourth aspect, in a third possible implementation manner of the fourth aspect, the configuration information does not include the second quality indicator threshold, and the method further includes:

receiving, by the macro base station, at least one third quality indicator that is fed back by UE of the micro base station and that is of a channel from the macro base station to the UE of the micro base station; and
determining, by the macro base station, the second quality indicator threshold according to the at least one third quality indicator fed back by the UE of the micro base station, where
the UE of the micro base station refers to UE that uses a micro base station as a serving base station, and the micro base station is deployed in coverage of a macro cell of the macro base station.

With reference to the third possible implementation manner of the fourth aspect, in a fourth possible implementation manner of the fourth aspect, the determining, by the macro base station, the second quality indicator threshold according to the at least one third quality indicator fed back by the UE of the micro base station includes:

determining, by the macro base station, that a minimum quality indicator in the at least one third quality indicator is the second quality indicator threshold; or
determining, by the macro base station, that a preset adjustment value added to a minimum quality indicator in the at least one third quality indicator is the second quality indicator threshold; or
performing, by the macro base station, weighting on the at least one third quality indicator, to obtain the second quality indicator threshold; or
performing, by the macro base station, weighting on the at least one third quality indicator to obtain a weighted average, and adding the weighted average to a preset adjustment value, to obtain the second quality indicator threshold.

According to a fifth aspect, an embodiment of the present invention provides user equipment, including:

a generation module, configured to generate a first quality indicator of a channel from an interfering cell of the UE to the UE; and
a sending module, configured to feed back the first quality indicator generated by the generation module to a first base station to which the interfering cell belongs, and/or feed back the first quality indicator to a second base station to which a serving cell of the UE belongs, to enable the first base station and/or the second base station to select, according to the first quality indicator, interfering UE that is to be scheduled together with the UE, schedule, in the serving cell of the UE, the UE, and simultaneously schedule, in a serving cell of the interfering UE, the interfering UE, where
the serving cell of the interfering UE is the interfering cell of the UE, and the interfering UE refers to that: a signal transmitted by the serving cell of the interfering UE interferes with the UE.

In a first possible implementation manner of the fifth aspect, the first quality indicator includes:

a signal-to-noise ratio SNR; or
a channel quality indicator CQI; or
a transport block size TBS that enables a channel to support demodulation and decoding.

With reference to the fifth aspect or the first possible implementation manner of the fifth aspect, in a second possible implementation manner of the fifth aspect, the generation module is specifically configured to:

perform estimation according to a pilot channel of the interfering cell, to obtain the first quality indicator.

With reference to the user equipment according to any one of the fifth aspect to the second possible implementation manner of the fifth aspect, in a third possible implementation manner of the fifth aspect, the first base station and the second base station are a same base station; or

the first base station and the second base station are connected to each other by using a low-delay link; or

the first base station is a macro base station, and the second base station is a micro base station.

According to a sixth aspect, an embodiment of the present invention provides a base station, including:

a receiving module, configured to receive a first quality indicator that is fed back by user equipment UE and that is of a channel from an interfering cell of the UE to the UE;

a selection module, configured to select, according to the first quality indicator received by the receiving module, interfering UE that is to be scheduled together with the UE; and

a processing module, configured to schedule, in a serving cell of the UE, the UE, and simultaneously schedule, in a serving cell of the interfering UE, the interfering UE selected by the selection module, where

the interfering cell of the UE and the serving cell of the UE belong to a same base station, or belong to two different base stations, wherein a low-delay link exists between the two base stations, where

the serving cell of the interfering UE is the interfering cell of the UE, and the interfering UE refers to that: a signal transmitted by the serving cell of the interfering UE interferes with the UE.

In a first possible implementation manner of the sixth aspect, the first quality indicator includes:

a signal-to-noise ratio SNR; or

a channel quality indicator CQI; or

a transport block size TBS that enables a channel to support demodulation and decoding.

With reference to the sixth aspect or the first possible implementation manner of the sixth aspect, in a second possible implementation manner of the sixth aspect, the receiving module is further configured to:

before the selection module selects, according to the first quality indicator, the interfering UE that is to be scheduled together with the UE, receive second quality indicators that are fed back by multiple interfering UEs and that are of channels from a serving cell of the multiple interfering UEs to the interfering UEs; and

the selection module is specifically configured to:

select, according to the received first quality indicator and the second quality indicators that are fed back by the multiple interfering UEs, the interfering UE that meets the following formula (1):

$$\text{the second quality indicator} \leq \text{the first quality indicator} + \text{DELTA} \qquad (1), \text{where}$$

where

the DELTA is a parameter that is preset in a protocol or that is notified by the base station.

According to a seventh aspect, an embodiment of the present invention provides a micro base station, including:

a receiving module, configured to receive configuration information sent by a network side, where the configuration information includes a resource restricted subframe RRS scheduling pattern and a first quality indicator threshold, where

the receiving module is further configured to receive a first quality indicator that is fed back by user equipment UE of the micro base station and that is of a channel from an interfering cell of the UE of the micro base station to the UE of the micro base station; and

a processing module, configured to schedule, in N RRS subframes in the RRS scheduling pattern, the UE of the micro base station according to the configuration information received by the receiving module, where

the UE of the micro base station refers to UE that uses the micro base station as a serving base station.

In a first possible implementation manner of the seventh aspect, the processing module is configured to preferentially schedule, according to the configuration information in the N RRS subframes in the RRS scheduling pattern, UE that is of the micro base station and whose first quality indicator is greater than the first quality indicator threshold.

With reference to the seventh aspect or the first possible implementation manner of the seventh aspect, in a second possible implementation manner of the seventh aspect, the first quality indicator includes:

> a signal-to-noise ratio SNR; or
> a channel quality indicator CQI; or
> a transport block size TBS that enables a channel to support demodulation and decoding.

According to an eighth aspect, an embodiment of the present invention provides a macro base station, including:

> a receiving module, configured to receive configuration information sent by a network side, where the configuration information includes a resource restricted subframe RRS scheduling pattern and a second quality indicator threshold, where
> the receiving module is further configured to receive a second quality indicator that is fed back by UE of the macro base station and that is of a channel from a serving cell of the UE of the macro base station to the UE of the macro base station; and
> a processing module, configured to preferentially schedule, according to the configuration information received by the receiving module in the N RRS subframes in the RRS scheduling pattern, the UE that is of the macro base station and whose second quality indicator is less than the second quality indicator threshold, where
> the UE of the macro base station refers to UE that uses the macro base station as a serving base station.

In a first possible implementation manner of the eighth aspect, the second quality indicator includes:

> a signal-to-noise ratio SNR; or
> a channel quality indicator CQI; or
> a transport block size TBS that enables a channel to support demodulation and decoding.

With reference to the eighth aspect or the first possible implementation manner of the eighth aspect, in a second possible implementation manner of the eighth aspect, if the UE that is of the macro base station and whose second quality indicator is less than the second quality indicator threshold does not exist, the processing module is configured to perform, in the N RRS subframes, any one of the following scheduling:

> scheduling in which a transport block size TBS is limited; or
> scheduling in which a modulation scheme is limited; or
> scheduling in which a code channel quantity is limited; or
> any scheduling.

With reference to the macro base station according to any one of the eighth aspect to the second possible implementation manner of the eighth aspect, in a third possible implementation manner of the eighth aspect, the configuration information does not include the second quality indicator threshold, and the receiving module is further configured to:

> receive at least one third quality indicator that is fed back by UE of the micro base station and that is of a channel from the macro base station to the UE of the micro base station; and
> the processing module is further configured to:

>> determine the second quality indicator threshold according to the at least one third quality indicator fed back by the UE of the micro base station, where
>> the UE of the micro base station refers to UE that uses a micro base station as a serving base station, and the micro base station is deployed in coverage of a macro cell of the macro base station.

With reference to the third possible implementation manner of the eighth aspect, in a fourth possible implementation manner of the eighth aspect, the processing module is specifically further configured to:

> determine that a minimum quality indicator in the at least one third quality indicator is the second quality indicator threshold; or
> determine that a preset adjustment value added to a minimum quality indicator in the at least one third quality indicator is the second quality indicator threshold; or
> perform weighting on the at least one third quality indicator, to obtain the second quality indicator threshold; or
> perform weighting on the at least one third quality indicator, and adding a preset adjustment value, to obtain the second quality indicator threshold.

According to a ninth aspect, an embodiment of the present invention provides a communications system, including the user equipment according to any one of the fifth aspect to the third possible implementation manner of the fifth aspect, and the base station according to any one of the sixth aspect to the second possible implementation manner of the sixth aspect; or

including the user equipment according to any one of the fifth aspect to the third possible implementation manner of the fifth aspect, a micro base station that supports a scheduling pattern of a RRS, and the macro base station according to any one of the eighth aspect to the fourth possible implementation manner of the eighth aspect; or

including the user equipment according to any one of the fifth aspect to the third possible implementation manner of the fifth aspect, the micro base station according to any one of the seventh aspect to the second possible implementation manner of the seventh aspect, and the macro base station according to any one of the eighth aspect to the fourth possible implementation manner of the eighth aspect.

By means of the method for coordinated scheduling based on interference cancellation, the apparatus, and the system that are provided in the embodiments of the present invention, after an interfered UE generates a first quality indicator of a channel from an interfering cell of the interfered UE to the interfered UE, the interfered UE feeds back the first quality indicator to a first base station to which the interfering cell belongs, and/or feeds back the first quality indicator to a second base station to which a serving cell of the UE belongs, to enable the first base station and/or the second base station to select, according to the first quality indicator, interfering UE that is to be scheduled together with the UE, schedule, in the serving cell of the UE, the UE, and simultaneously schedule, in a serving cell of the interfering UE, the interfering UE. Therefore, for victim IC UE, when interference cancellation is performed, an interfering signal transmitted by an interfering cell to interfering UE can be relatively precisely reconstructed by the victim IC UE, thereby improving the interference cancellation efficiency of the victim IC UE.

## BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.

FIG. 1 is a schematic diagram of three typical interference scenarios;
FIG. 2 is a schematic diagram in which UE eliminates interference in a scenario of interference between a macro cell and a micro cell;
FIG. 3 is a flowchart of Embodiment 1 of a method for coordinated scheduling based on interference cancellation according to the present invention;
FIG. 4 is a flowchart of Embodiment 2 of a method for coordinated scheduling based on interference cancellation according to the present invention;
FIG. 5 is a flowchart of a scheduling operation by a macro base station in Embodiment 2 of a method for coordinated scheduling based on interference cancellation according to the present invention;
FIG. 6 is a schematic structural diagram of Embodiment 1 of user equipment according to the present invention;
FIG. 7 is a schematic structural diagram of Embodiment 1 of a base station according to the present invention;
FIG. 8 is a schematic structural diagram of Embodiment 1 of a micro base station according to the present invention;
FIG. 9 is a schematic structural diagram of Embodiment 1 of a macro base station according to the present invention;
FIG. 10 is a schematic structural diagram of Embodiment 2 of user equipment according to the present invention;
FIG. 11 is a schematic structural diagram of Embodiment 2 of a base station according to the present invention;
FIG. 12 is a schematic structural diagram of Embodiment 2 of a micro base station according to the present invention; and
FIG. 13 is a schematic structural diagram of Embodiment 2 of a macro base station according to the present invention.

## DESCRIPTION OF EMBODIMENTS

To make the objectives, technical solutions, and advantages of the embodiments of the present invention clearer, the following clearly describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

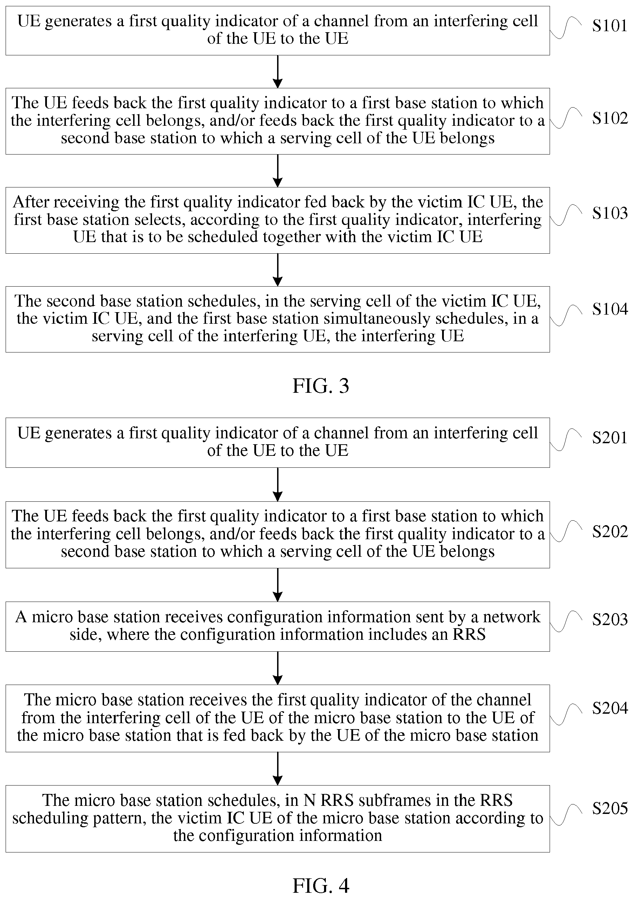

The embodiments of the present invention separately provide detailed description about interference cancellation in a scenario of interference between macro cells and a scenario of interference between a macro cell and a micro cell. First, a detailed description about a method for coordinated scheduling based on interference cancellation in the scenario of interference between macro cells is provided, and mainly targets victim IC UE located on a border between different cells that are close to a same macro base station (NodeB). FIG. 3 is a flowchart of Embodiment 1 of a method for coordinated scheduling based on interference cancellation according to the present invention. As shown in FIG. 3, the method in this embodiment may include:

S101: UE generates a first quality indicator of a channel from an interfering cell of the UE to the UE.

Herein, it should be noted that, the UE refers to interfered UE, that is, victim IC UE, a serving cell of interfering UE is the interfering cell of the victim IC UE, and the interfering UE refers to that: a signal transmitted by the serving cell of the interfering UE interferes with the victim IC UE. The first quality indicator includes: a signal-to-noise ratio (SNR), or a channel quality indicator (CQI), or a transport block size (TBS) that enables a channel to support demodulation and decoding, or a value that can represent quality of an interfering channel from the interfering cell to the victim IC UE.

Specifically, for the generating, by UE, a first quality indicator of a channel from an interfering signal of an interfering cell of the UE to the UE, an implementable manner is: performing, by the UE, estimation according to a pilot channel of the interfering cell, to obtain the first quality indicator, or explicitly or implicitly acquiring, by the UE, the first quality indicator by using another method.

S102: The UE feeds back the first quality indicator to a first base station to which the interfering cell belongs, and/or feeds back the first quality indicator to a second base station to which a serving cell of the UE belongs.

Specifically, in the scenario of interference between macro cells in this embodiment, the first base station and the second base station are a same base station, that is, the first base station and the second base station are a same macro base station, and the interfering cell and the serving cell of the UE belong to a same macro base station. In the scenario of interference between a macro cell and a micro cell, the first base station is a macro base station, the second base station is a micro base station, and the macro base station (the first base station) and the micro base station (the second base station) are connected to each other by using a low-delay link; it may be considered that, when scheduling different UEs, the macro base station and the micro base station know scheduling information of each other.

As an example, the Victim IC UE may simultaneously feed back, by using a high-speed dedicated physical control channel (HS-DPCCH), the first quality indicator to both the first base station and the second base station; an existing quality indicator feedback format used by a multi-carrier, multi-flow, or multiple-input multiple-output MIMO system may be reused as a specific feedback format.

Without loss of generality, in victim IC, information about the first quality indicator may be fed back by using another method.

S103: After receiving the first quality indicator fed back by the victim IC UE, the first base station selects, according to the first quality indicator, interfering UE that is to be scheduled together with the victim IC UE.

Specifically, the interfering cell and the serving cell of the victim IC UE are of a same base station, that is, the first base station and the second base station are a same base station, or are two base stations that are connected by a low-delay link; therefore, the first base station may perform coordinated scheduling to assist the victim IC UE to perform an IC operation. That is, when the second base station schedules, in the serving cell of the victim IC UE, the victim IC UE, the first base station simultaneously performs, in the serving cell of the interfering UE, paired scheduling, that is, performs an operation in the following S104.

S104: The second base station schedules, in the serving cell of the victim IC UE, the victim IC UE, and the first base station simultaneously schedules, in a serving cell of the interfering UE, the interfering UE.

For how to perform the paired scheduling, specifically, as an implementable manner, before S103, the method further includes:

receiving, by the first base station, second quality indicators that are fed back by multiple interfering UEs and that are of channels from a serving cell of the interfering UEs to the interfering UEs. That is, the multiple interfering UEs feed back, to a serving base station of the interfering UEs, the second quality indicators of the channels from the serving cell of the multiple interfering UEs to the interfering UEs.

That the first base station selects interfering UE that is to be scheduled together with the victim IC UE in S103 specifically includes:

S103a: The first base station selects, according to the received first quality indicator and the second quality indicators that are fed back by the multiple interfering UEs, the interfering UE that meets the following formula (1):

$$\text{the second quality indicator} \leq \text{the first quality indicator} + \text{DELTA} \qquad (1),$$

where

the DELTA is a parameter that is preset in a protocol or that is notified by the base station.

An objective of the foregoing operations is to be capable of ensuring that victim IC UE can reconstruct, with a relatively high precision, an interfering signal sent by an interfering cell, so as to ensure that the victim IC UE has relatively high IC efficiency. Without loss of generality, post-decoding IC UE is used as an example; a first base station (a macro base station) selects, in a paired manner, appropriate interfering UE to perform scheduling in an interfering cell, to enable victim IC UE that is scheduled simultaneously in another cell to correctly decode a TB block of the interfering UE with a very high probability, so that a reconstructed signal is formed after encoding and modulation are performed again, and then is eliminated from an overall received signal; therefore, the interference cancellation efficiency of post-decoding victim IC UE can be improved.

Herein, it should be noted that, for all interference between cells of NodeBs that are based on a centralized RAN (CRAN) architecture and all interference between different transmit points (Tx Point) in a combined cell, because a low-delay link between base stations exists, it may be considered that when performing scheduling, two base stations know scheduling information of each other, which may be considered as consistent with a case in which a same base station performs scheduling in two cells; that is, it may be considered that a central scheduler exists in different cells that are based on CRAN or a combined cell, and therefore for both the CRAN architecture and a Combined cell architecture, the foregoing manner for interference from a neighboring cell that shares a base station may be considered for implementing paired scheduling.

By means of the method for coordinated scheduling based on interference cancellation that is provided in this embodiment, after an interfered UE generates a first quality indicator of a channel from an interfering cell of the interfered UE to the interfered UE, the interfered UE feeds back the first quality indicator to a first base station to which the interfering cell belongs, and/or feeds back the first quality indicator to a second base station to which a serving cell of the UE belongs, to enable the first base station and/or the second base station to select, according to the first quality indicator, interfering UE that is to be scheduled together with the UE, schedule, in the serving cell of the UE, the UE, and simultaneously schedule, in a serving cell of the interfering UE, the interfering UE. Therefore, for victim IC UE, when interference cancellation is performed, an interfering signal transmitted by an interfering cell to interfering UE can be relatively precisely reconstructed by the victim IC UE, thereby improving the interference cancellation efficiency of the victim IC UE. Post-decoding IC UE is used as an example; in this embodiment, UE that is scheduled in an interfering cell and that is scheduled together with victim IC UE in a paired manner can be correctly decoded by the victim IC UE with a very high probability (without loss of generality, a network side may require that a first quality indicator is fed back by using a block error rate target value ($BLER_{target}$) as a target), which ensures that when being scheduled, the victim IC UE can always relatively accurately reconstruct an interfering signal, thereby ensuring the interference cancellation efficiency of the victim IC UE.

On a heterogeneous network (Hetnet), for UE at the edge of a micro base station (such as a low-power node), a cell of a macro base station of the UE becomes a main interference source for the UE at the edge of the micro base station. The following describes in detail a method for coordinated scheduling based on interference cancellation in a scenario of interference between a macro cell and a micro cell. FIG. 4 is a flowchart of Embodiment 2 of a method for coordinated scheduling based on interference cancellation according to the present invention. As shown in FIG. 4, the method in this embodiment may include:

S201: UE generates a first quality indicator of a channel from an interfering cell of the UE to the UE.

The UE refers to interfered UE, that is, victim IC UE. A serving cell of interfering UE is the interfering cell of the victim IC UE, and the interfering UE refers to that: a signal transmitted by the serving cell of the interfering UE interferes with the victim IC UE. The first quality indicator includes: an SNR, or a CQI, or a TBS that enables a channel to support demodulation and decoding, or another indication value that directly or indirectly indicates quality of an interfering signal.

Specifically, for the generating, by UE, a first quality indicator of a channel from an interfering signal of an interfering cell of the UE to the UE, as an example, an implementable manner is: performing, by the UE, estimation according to a pilot channel of the interfering cell, to obtain the first quality indicator, or explicitly or implicitly acquiring, by the UE, the first quality indicator by using another method.

S202: The UE feeds back the first quality indicator to a first base station to which the interfering cell belongs, and/or feeds back the first quality indicator to a second base station to which a serving cell of the UE belongs.

Specifically, in a scenario in this embodiment, the first base station is a macro base station, the second base station is a micro base station, and no low-delay link exists between the macro base station and the micro base station, that is, information related to scheduling cannot be exchanged between the macro base station and the micro base station in real time. As an example, the Victim IC UE may simultaneously feed back, by using an HS-DPCCH, the first quality indicator to both the first base station and the second base station; an existing quality indicator feedback format used by a multi-carrier, multi-flow, or multiple-input multiple-output MIMO system may be reused as a specific feedback format.

The following S203 to S205 are coordinated scheduling operations on the micro base station.

S203: A micro base station receives configuration information sent by a network side, where the configuration information includes a resource restricted subframe (RS) scheduling pattern.

On the network side, an RRS scheduling pattern is preset, where the RRS scheduling pattern includes M non-RRS subframes and N RRS subframes, and may be specifically set as follows:

in the N RRS subframes: the macro base station performs, in the N RRS subframes, scheduling in a limited format or in a paired manner, for example, scheduling in which a modulation scheme is limited to a lower order modulation scheme or a code channel quantity is relatively low is performed, or UE whose TB block size is less than a threshold is scheduled; the micro base station preferentially schedules, in the N RRS subframes, victim IC UE of the micro base station; and

in the M non-RRS subframes: the macro base station can schedule any UE of the macro base station; the micro base station can schedule any UE of the micro base station.

An RRS scheduling pattern is preset on a macro base station and an LPN, so that victim IC UE of a micro base station is always scheduled more often in an RRS subframe. Based on this prior indication, even if there is no low-delay link between a macro base station and a micro base station, the macro base station can also preferentially schedule, in an RRS subframe, interfering UE whose interfering signal is easy to be precisely reconstructed by victim IC UE, to perform paired scheduling.

S204: The micro base station receives the first quality indicator that is fed back by the UE of the micro base station and that is of the channel from the interfering cell of the UE of the micro base station to the UE of the micro base station.

Herein, it should be noted that, in this embodiment, the UE of the micro base station refers to UE that uses a micro base station as a serving base station; the UE of the micro base station is the victim IC UE in S201 and S202, and the first quality indicator is a quality indicator, generated by the victim IC UE, of a channel from the interfering cell of the victim IC UE to the victim IC UE.

S205: The micro base station schedules, in N RRS subframes in the RRS scheduling pattern, the victim IC UE of the micro base station according to the configuration information.

Further, as an implementable manner, the configuration information further includes a first quality indicator threshold, the micro base station preferentially schedules, according to the configuration information in the N RRS subframes in the RRS scheduling pattern, victim IC UE that is of the micro base station and whose first quality indicator is greater than the first quality indicator threshold.

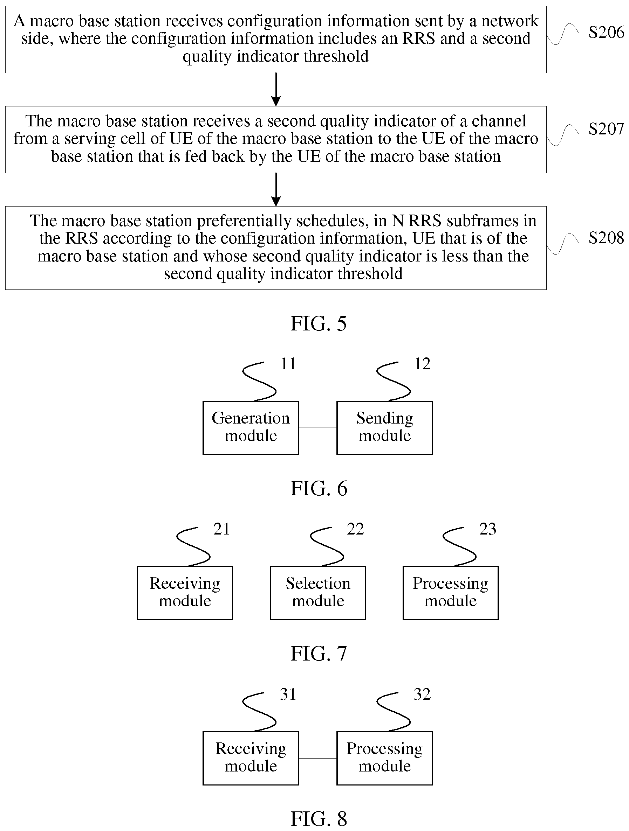

FIG. 5 is a flowchart of a scheduling operation by a macro base station in Embodiment 2 of a method for coordinated scheduling based on interference cancellation according to the present invention. With reference to FIG. 5, the following S206 to S208 are coordinated scheduling operations by the macro base station. Scheduling operations by the micro base station and the macro base station are performed simultaneously.

S206: A macro base station receives configuration information sent by a network side, where the configuration information includes an RRS scheduling pattern and a second quality indicator threshold.

S207: The macro base station receives a second quality indicator that is fed back by UE of the macro base station and that is of a channel from a serving cell of the UE of the macro base station to the UE of the macro base station.

The UE of the macro base station refers to UE that uses the macro base station as a serving base station. The second quality indicator includes: an SNR, or a CQI, or a TBS that enables a channel to support demodulation and decoding, or another indication value that directly or indirectly indicates quality of an interfering signal.

S208: The macro base station preferentially schedules, according to the configuration information in N RRS subframes in the RRS scheduling pattern, UE that is of the macro base station and whose second quality indicator is less than the second quality indicator threshold.

Further, if the UE that is of the macro base station and whose second quality indicator is less than the second quality indicator threshold does not exist, the macro base station selectively performs, in the N RRS subframes, any one of the following scheduling:

scheduling in which the TBS is limited; or scheduling in which a modulation scheme is limited; or scheduling in which a code channel quantity is limited; or any scheduling.

Further, the configuration information does not include the second quality indicator threshold, the foregoing method further includes:

S10: The macro base station receives at least one third quality indicator that is fed back by victim IC UE of the micro base station and that is of a channel from the macro base station to the UE of the micro base station.

S11: The macro base station determines the second quality indicator threshold according to the at least one third quality indicator fed back by the victim IC UE of the micro base station.

The victim IC UE of the micro base station refers to victim IC UE that uses the micro base station as a serving base station, and the micro base station is deployed in coverage of a macro cell of the macro base station.

Specifically, for how the macro base station determines the second quality indicator threshold, the following method may be used:

determining, by the macro base station, that a minimum quality indicator in the at least one third quality indicator is the second quality indicator threshold; or determining, by the macro base station, that a preset adjustment value added to a minimum quality indicator in the at least one third quality indicator is the second quality indicator threshold; or performing, by the macro base station, weighting on the at least one third quality indicator, to obtain the second quality indicator threshold; or performing, by the macro base station, weighting on the at least one third quality indicator to obtain a weighted average, and adding the weighted average to a preset adjustment value, to obtain the second quality indicator threshold.

In the foregoing embodiment, once the victim IC UE of the micro base station cannot correctly perform decoding to eliminate neighboring cell interference, a serving cell quality indicator fed back by the victim IC UE is a quality indicator value that exists before interference cancellation, and may be marked on the feedback channel, so that the micro base station may perform processing. For example, in a non-RRS in a scenario of interference between macro cells or a scenario of interference between a macro cell and a micro cell, the micro base station may select a transport block size and a transmission format for IC UE according to these CQI values before interference cancellation, and then perform scheduling in the non-RRS.

By means of the method for coordinated scheduling based on interference cancellation that is provided in this embodiment, after an interfered UE of a micro base station generates a first quality indicator of a channel from an interfering cell of the interfered UE to the interfered UE, the interfered UE feeds back the first quality indicator to the micro base station, a macro base station preferentially schedules, according to configuration information in N RRS subframes in an RRS scheduling pattern, UE that is of the macro base station and whose second quality indicator is less than a second quality indicator threshold, and the micro base station preferentially schedules, in the RRS subframes in the RRS scheduling pattern, the victim IC UE. In this way, the victim IC UE of the micro base station is always scheduled in an interference environment that is more beneficial to interference cancellation, and therefore the IC efficiency of an interference cancellation receiver can be improved.

Further, by means of the method for coordinated scheduling based on interference cancellation that is provided in this embodiment, after an interfered UE of a micro base station generates a first quality indicator of a channel from an interfering cell of the interfered UE to the interfered UE, the interfered UE feeds back the first quality indicator to the micro base station, a macro base station preferentially schedules, according to configuration information in N RRS subframes in an RRS scheduling pattern, UE that is of the macro base station and whose second quality indicator is less than a second quality indicator threshold, and the micro base station preferentially schedules, according to the configuration information sent by a network side, in the N RRS subframes in the RRS scheduling pattern, victim IC UE that is of the micro base station and whose first quality indicator is greater than a first quality indicator threshold. In this way, the micro base station preferentially schedules, in the RRS subframes, victim IC UE whose paired scheduling gain is higher, and therefore the IC efficiency of the interference cancellation receiver can be improved.

Without loss of generality, all other methods in which paired scheduling is implemented according to an interfering cell quality indicator that is fed back by victim IC UE, and with reference to a serving cell quality indicator that is fed back by interfering UE, and a serving cell quality indicator that is fed back by interfered UE, to improve interference reconstruction efficiency of IC UE, belong to an embodiment of the method for coordinated scheduling based on interference cancellation that is provided in the present invention.

FIG. 6 is a schematic structural diagram of Embodiment 1 of user equipment according to the present invention. As shown in FIG. 6, the apparatus in this embodiment may include: a generation module 11 and a sending module 12, where the generation module 11 is configured to generate a first quality indicator of a channel from an interfering cell of UE to the UE; and the sending module 12 is configured to feed back the first quality indicator generated by the generation module to a first base station to which the interfering cell belongs, and/or feed back the first quality indicator to a second base station to which a serving cell of the UE belongs, to enable the first base station and/or the second base station to select, according to the first quality indicator, interfering UE that is to be scheduled together with the UE, schedule, in the serving cell of the UE, the UE, and simultaneously schedule, in a serving cell of the interfering UE, the interfering UE, where

the serving cell of the interfering UE is the interfering cell of the UE, and the interfering UE refers to that: a signal transmitted by the serving cell of the interfering UE interferes with the UE.

Further, the first quality indicator includes: an SNR, or a CQI, or a TBS that enables a channel to support demodulation and decoding, or another indication value that directly or indirectly indicates quality of an interfering signal.

Further, the generation module 11 is specifically configured to perform estimation according to a pilot channel of the interfering cell, to obtain the first quality indicator, or

obtain the first quality indicator in another manner.

In the foregoing embodiment, the first base station and the second base station are a same base station, or the first base station and the second base station are connected to each other by using a low-delay link; or the first base station is a macro base station, and the second base station is a micro base station.

The apparatus in this embodiment may be configured to execute the technical solution of the method embodiment shown in FIG. 3. An implementation principle thereof is similar, and details are not described herein again.

By means of the user equipment provided in this embodiment, a generation module generates a first quality indicator of a channel from an interfering cell of UE to the UE; a sending module feeds back the first quality indicator generated by the generation module to a first base station to which the interfering cell belongs, and/or feeds back the first quality indicator to a second base station to which a serving cell of the UE belongs, to enable the first base station and/or the second base station to select, according to the first quality indicator, interfering UE that is to be scheduled together with the UE, schedule, in the serving cell of the UE, the UE, and simultaneously schedule, in a serving cell of the interfering UE, the interfering UE; therefore, for victim IC UE, when interference cancellation is performed, paired scheduling of the interfering UE is implemented in the interfering cell, so that an interfering signal sent by the interfering cell to the interfering UE can be relatively precisely reconstructed by the victim IC UE, thereby improving the interference cancellation efficiency of the victim IC UE.

FIG. 7 is a schematic structural diagram of Embodiment 1 of a base station according to the present invention. As shown in FIG. 7, the apparatus in this embodiment may include: a receiving module 21, a selection module 22, and a processing module 23, where the receiving module 21 is configured to receive a first quality indicator that is fed back by user equipment UE and that is of a channel from an interfering cell of the UE to the UE; the selection module 22 is configured to select, according to the first quality indicator received by the receiving module 21, interfering UE that is to be scheduled together with the UE; and the processing module 23 is configured to schedule, in a serving cell of the UE, the UE, and simultaneously schedule, in a serving cell of the interfering UE, the interfering UE selected by the selection module, where

the interfering cell of the UE and the serving cell of the UE belong to a same base station, or belong to two different base stations, wherein a low-delay link exists between the two base stations, where

the serving cell of the interfering UE is the interfering cell of the UE, and the interfering UE refers to that: a signal transmitted by the serving cell of the interfering UE interferes with the UE.

Further, the first quality indicator includes: an SNR, or a CQI, or a TBS that enables a channel to support demodulation and decoding, or another indication value that directly or indirectly indicates quality of an interfering signal.

The receiving module 21 is further configured to:

before the selection module 22 selects, according to the first quality indicator, the interfering UE that is to be scheduled together with the UE, receive second quality indicators that are fed back by multiple interfering UEs and that are of channels from a serving cell of the interfering UEs to the interfering UEs; and

the selection module 22 is specifically configured to:

select, according to the received first quality indicator and the second quality indicators that are fed back by the multiple interfering UEs, the interfering UE that meets the following formula (1):

$$\text{the second quality indicator} \leq \text{the first quality indicator} + \text{DELTA} \qquad (1),$$

where

the DELTA is a parameter that is preset in a protocol or that is notified by the base station.

The apparatus in this embodiment may be configured to execute the technical solution of the method embodiment shown in FIG. 3. An implementation principle thereof is similar, and details are not described herein again.

By means of the base station provided in this embodiment, a receiving module receives a first quality indicator that is fed back by user equipment UE and that is of a channel from an interfering cell of the UE to the UE; a selection module selects, according to the first quality indicator, interfering UE that is to be scheduled together with the UE; a processing module schedules, in a serving cell of the UE, the UE, and simultaneously schedule, in a serving cell of the interfering UE, the interfering UE selected by the selection module; therefore, for victim IC UE, when interference cancellation is performed, an interfering signal sent by the interfering cell can be reconstructed with a relatively high precision, to ensure that the victim IC UE has a relatively high IC efficiency. Without loss of generality, post-decoding IC UE is used as an example; a base station selects, in a paired manner, appropriate interfering UE to perform scheduling in an interfering cell, to enable victim IC UE that is scheduled simultaneously in another cell to correctly decode a TB block of the interfering UE with a very high probability, so that a reconstructed signal is formed after encoding and modulation are performed again, and then is eliminated from an overall received signal; therefore, the interference cancellation efficiency of post-decoding victim IC UE can be improved.

FIG. 8 is a schematic structural diagram of Embodiment 1 of a micro base station according to the present invention. As shown in FIG. 8, the apparatus in this embodiment may include: a receiving module 31 and a processing module 32, where the receiving module 31 is configured to receive configuration information sent by a network side, where the configuration information includes a resource restricted subframe RRS scheduling pattern and a first quality indicator threshold, where the receiving module 31 is further configured to receive a first quality indicator that is fed back by UE of the micro base station and that is of a channel from an interfering cell of the UE of the micro base station to the UE of the micro base station; and the processing module 32 is configured to preferentially schedule, according to the configuration information received by the receiving module 31, in N RRS subframes in the RRS scheduling pattern, UE that is of the micro base station and whose first quality indicator is greater than the first quality indicator threshold, where the UE of the micro base station refers to UE that uses the micro base station as a serving base station.

Further, the first quality indicator includes: an SNR, or a CQI, or a TBS that enables a channel to support demodulation and decoding, or another indication value that directly or indirectly indicates quality of an interfering signal.

The apparatus in this embodiment may be configured to execute the technical solution of the method embodiment shown in FIG. 4. An implementation principle thereof is similar, and details are not described herein again.

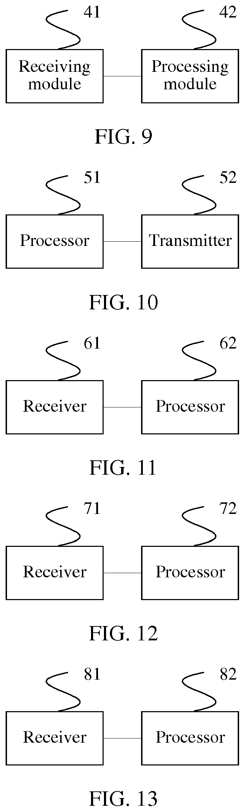

FIG. 9 is a schematic structural diagram of Embodiment 1 of a macro base station according to the present invention. As shown in FIG. 9, the apparatus in this embodiment may include: a receiving module 41 and a processing module 42, where the receiving module 41 is configured to receive configuration information sent by a network side, where the configuration information includes a resource restricted subframe RRS scheduling pattern and a second quality indicator threshold, where the receiving module 41 is further configured to receive a second quality indicator that is fed back by UE of the macro base station and that is of a channel from a serving cell of the UE of the macro base station to the UE of the macro base station; and the processing module 42 is configured to preferentially schedule, according to the configuration information received by the receiving module 41, in N RRS subframes in the RRS scheduling pattern, the UE that is of the macro base station and whose second quality indicator is less than the second quality indicator threshold, where the UE of the macro base station refers to UE that uses the macro base station as a serving base station.

Further, the second quality indicator includes: an SNR, or a CQI, or a TBS that enables a channel to support demodulation and decoding, or another indication value that directly or indirectly indicates quality of an interfering signal.

Further, if the UE that is of the macro base station and whose second quality indicator is less than the second quality indicator threshold does not exist, the processing module 42 is configured to perform, in the N RRS subframes, any one of the following scheduling:

scheduling in which the transport block size TBS is limited; or scheduling in which a modulation scheme is limited; or scheduling in which a code channel quantity is limited; or any scheduling.

In the foregoing embodiment, when the configuration information does not include the second quality indicator threshold, the receiving module 41 is further configured to receive a third quality indicator that is fed back by UE of the micro base station and that is of a channel from a macro cell to the UE of the micro base station; and the processing module 42 is further configured to:

determine the second quality indicator threshold according to the at least one third quality indicator fed back by the UE of the micro base station, where the UE of the micro base station refers to UE that uses a micro base station as a serving base station, and the micro base station is deployed in coverage of a macro cell of the macro base station.

Further, the processing module 42 is specifically further configured to:

determine, by the macro base station, that a minimum quality indicator in the at least one third quality indicator is the second quality indicator threshold; or determine, by the macro base station, that a preset adjustment value added to a minimum quality indicator in the at least one third quality indicator is the second quality indicator threshold; or perform, by the macro base station, weighting on the at least one third quality indicator, to obtain the second quality indicator threshold; or perform, by the macro base station, weighting on the at least one third quality indicator, and add a preset adjustment value, to obtain the second quality indicator threshold.

The apparatus in this embodiment may be configured to execute the technical solution of the method embodiment shown in FIG. 5. An implementation principle thereof is similar, and details are not described herein again.

By means of the macro base station provided in the embodiments shown in FIG. 8 and FIG. 9, a receiving module in the macro base station receives configuration information sent by a network side, and receives a second quality indicator that is fed back by UE of the macro base station and that is of a channel from a serving cell of the UE of the macro base station to the UE of the macro base station, a processing module preferentially schedules, according to configuration information in N RRS subframes in an RRS scheduling pattern, UE that is of the macro base station and whose second quality indicator is less than a second quality indicator threshold, and the micro base station preferentially schedules, in the RRS subframes in the RRS scheduling pattern, the victim IC UE simultaneously. In this way, the victim IC UE of the micro base station is always scheduled in an interference environment that is more beneficial to interference cancellation, and thereby the IC efficiency of an interference cancellation receiver can be improved.

Further, by means of the micro base station and the macro base station that are provided in the embodiments shown in FIG. 8 and FIG. 9, a receiving module in the macro base station receives configuration information sent by a network side, and receives a second quality indicator that is fed back by UE of the macro base station and that is of a channel from a serving cell of the UE of the macro base station to the UE of the macro base station; a processing module preferentially schedules, according to configuration information in N RRS subframes in an RRS scheduling pattern, UE that is of the macro base station and whose second quality indicator is less than a second quality indicator threshold; a receiving module in the micro base station simultaneously receives configuration information sent by the network side, and receives a first quality indicator that is fed back by UE of the micro base station and that is of a channel from an interfering cell of the UE of the micro base station to the UE of the micro base station; and a processing module preferentially schedules, according to the configuration information sent by the network side, in the N RRS subframes in the RRS scheduling pattern, UE that is of the micro base station and whose first quality indicator is greater than a first quality indicator threshold. In this way, the micro base station preferentially schedules, in the RRS subframes, victim IC UE whose paired scheduling gain is higher, and thereby the IC efficiency of the interference cancellation receiver can be improved.

A communications system provided in an embodiment includes the user equipment shown in FIG. 6 and the base station shown in FIG. 7; or includes the user equipment shown in FIG. 6, the macro base station shown in FIG. 9, and a micro base station that supports the RRS scheduling pattern; or includes the user equipment shown in FIG. 6, the micro base station shown in FIG. 8, and the macro base station shown in FIG. 9.

FIG. 10 is a schematic structural diagram of Embodiment 2 of user equipment according to the present invention. As shown in FIG. 10, the apparatus in this embodiment may include: a processor 51 and a transmitter 52, where the processor 51 is configured to generate a first quality indicator of a channel from an interfering cell of UE to the UE; and The transmitter 52 is configured to feed back the first quality indicator generated by the processor 51 to a first base station to which the interfering cell belongs, and/or feed back the first quality indicator to a second base station to which a serving cell of the UE belongs, to enable the first base station and/or the second base station to select, according to the first quality indicator, interfering UE that is to be scheduled together with the UE, schedule, in the serving cell of the UE, the UE, and simultaneously schedule, in a serving cell of the interfering UE, the interfering UE, where the serving cell of the interfering UE is the interfering cell of the UE, and the interfering UE refers to that: a signal transmitted by the serving cell of the interfering UE interferes with the UE.

Further, the first quality indicator includes: an SNR, or a CQI, or a TBS that enables a channel to support demodulation and decoding, or another indication value that directly or indirectly indicates quality of an interfering signal.

Further, the processor 51 is specifically configured to perform estimation according to a pilot channel of the interfering cell, to obtain the first quality indicator, or obtain the first quality indicator in another manner.

In the foregoing embodiment, the first base station and the second base station are a same base station, or the first base station and the second base station are connected to each other by using a low-delay link; or the first base station is a macro base station, and the second base station is a micro base station.

The apparatus in this embodiment may be configured to execute a technical solution of the method embodiment shown in FIG. 3. An implementation principle thereof is similar, and details are not described herein again.

By means of the user equipment provided in this embodiment, a processor generates a first quality indicator of a channel from an interfering cell of UE to the UE; a transmitter feeds back the first quality indicator generated by the processor to a first base station to which the interfering cell belongs, and/or feeds back the first quality indicator to a second base station to which a serving cell of the UE belongs, to enable the first base station and/or the second base station to select, according to the first quality indicator, interfering UE that is to be scheduled together with the UE, schedule, in the serving cell of the UE, the UE, and simultaneously schedule, in a serving cell of the interfering UE, the interfering UE; therefore, for victim IC UE, when interference cancellation is performed, paired scheduling of the interfering UE is implemented in the interfering cell, so that an interfering signal sent by the interfering cell to the interfering UE can be relatively precisely reconstructed by the victim IC UE, thereby improving the interference cancellation efficiency of the victim IC UE.

FIG. 11 is a schematic structural diagram of Embodiment 2 of a base station according to the present invention. As shown in FIG. 11, the apparatus in this embodiment may include: a receiver 61 and a processor 62, where the receiver 61 is configured to receive a first quality indicator that is fed back by user equipment UE and that is of a channel from an interfering cell of the UE to the UE; the processor 62 is configured to select, according to the first quality indicator received by the receiver 61, interfering UE that is to be scheduled together with the UE; and the processor 62 is further configured to schedule, in a serving cell of the UE, the UE, and simultaneously schedule, in a serving cell of the interfering UE, the interfering UE selected by the processor 62, where

the interfering cell of the UE and the serving cell of the UE belong to a same base station, or belong to two different base stations, wherein a low-delay link exists between the two base stations, where

the serving cell of the interfering UE is the interfering cell of the UE, and the interfering UE refers to that: a signal transmitted by the serving cell of the interfering UE interferes with the UE.

Further, the first quality indicator includes: an SNR, or a CQI, or a TBS that enables a channel to support demodulation and decoding, or another indication value that directly or indirectly indicates quality of an interfering signal.

The receiver 61 is further configured to:

before the processor 62 selects, according to the first quality indicator, the interfering UE that is to be scheduled together with the UE, receive second quality indicators that are fed back by multiple interfering UEs and that are of channels from a serving cell of the interfering UEs to the interfering UEs; and

the processor 62 is specifically configured to:

select, according to the received first quality indicator and the second quality indicators that are fed back by the multiple interfering UEs, the interfering UE that meets the following formula (1):

$$\text{the second quality indicator} \leq \text{the first quality indicator} + \text{DELTA} \tag{1},$$

where

the DELTA is a parameter that is preset in a protocol or that is notified by the base station.

The apparatus in this embodiment may be configured to execute a technical solution of the method embodiment shown in FIG. 3. An implementation principle thereof is similar, and details are not described herein again.

By means of the base station provided in this embodiment, a receiver receives a first quality indicator that is fed back by user equipment UE and that is of a channel from an interfering cell of the UE to the UE; a processor selects, according to the first quality indicator, interfering UE that is to be scheduled together with the UE; a processor schedules, in a serving cell of the UE, the UE, and simultaneously schedules, in a serving cell of the interfering UE, the interfering UE selected by the processor; therefore, for victim IC UE, when interference cancellation is performed, an interfering signal sent by the interfering cell can be reconstructed with a relatively high precision, to ensure that the victim IC UE has a relatively high IC efficiency. Without loss of generality, post-decoding IC UE is used as an example; a base station selects, in a paired manner, appropriate interfering UE to perform scheduling in an interfering cell, to enable victim IC UE that is scheduled simultaneously in another cell to correctly decode a TB block of the interfering UE with a very high probability, so that a reconstructed signal is formed after encoding and modulation are performed again, and then is eliminated from an overall received signal; therefore, the interference cancellation efficiency of post-decoding victim IC UE can be improved.

FIG. 12 is a schematic structural diagram of Embodiment 2 of a micro base station according to the present invention. As shown in FIG. 12, the apparatus in this embodiment may include: a receiver 71 and a processor 72, where the receiver 71 is configured to receive configuration information sent by a network side, where the configuration information includes a resource restricted subframe RRS scheduling pattern and a first quality indicator threshold, where the receiver 71 is further configured to receive a first quality indicator that is fed back by UE of the micro base station and that is of a channel from an interfering cell of the UE of the micro base station to the UE of the micro base station; and the processor 72 is configured to preferentially schedule, according to the configuration information received by the receiver 71, in N RRS subframes in the RRS scheduling pattern, UE that is of the micro base station and whose first quality indicator is greater than the first quality indicator threshold, where the UE of the micro base station refers to UE that uses the micro base station as a serving base station.

Further, the first quality indicator includes: an SNR, or a CQI, or a TBS that enables a channel to support demodulation and decoding, or another indication value that directly or indirectly indicates quality of an interfering signal.

The apparatus in this embodiment may be configured to execute the technical solution of the method embodiment shown in FIG. 4. An implementation principle of it is similar, and details are not described herein again.

FIG. 13 is a schematic structural diagram of Embodiment 2 of a macro base station according to the present invention. As shown in FIG. 13, the apparatus in this embodiment may include: a receiver 81 and a processor 82, where the receiver 81 is configured to receive configuration information sent by a network side, where the configuration information includes a resource restricted subframe RRS scheduling pattern and a second quality indicator threshold, where the receiver 81 is further configured to receive a second quality indicator that is fed back by UE of the macro base station and that is of a channel from a serving cell of the UE of the macro base station to the UE of the macro base station; and the processor 82 is configured to preferentially schedule, according to the configuration information received by the receiver 81, in N RRS subframes in the RRS scheduling pattern, the UE that is of the macro base station and whose second quality indicator is less than the second quality indicator threshold, where
the UE of the macro base station refers to UE that uses the macro base station as a serving base station.

Further, the second quality indicator includes: an SNR, or a CQI, or a TBS that enables a channel to support demodulation and decoding, or another indication value that directly or indirectly indicates quality of an interfering signal.

Further, if the UE that is of the macro base station and whose second quality indicator is less than the second quality indicator threshold does not exist, the processor 82 is configured to perform, in the N RRS subframes, any one of the following scheduling:
scheduling in which the transport block size TBS is limited; or scheduling in which a modulation scheme is limited; or scheduling in which a code channel quantity is limited; or any scheduling.

In the foregoing embodiment, when the configuration information does not include the second quality indicator threshold, the receiver 81 is further configured to receive a third quality indicator that is fed back by UE of the micro base station and that is of a channel from a macro cell to the UE of the micro base station; and
the processor 82 is further configured to:

determine the second quality indicator threshold according to the at least one third quality indicator fed back by the UE of the micro base station, where
the UE of the micro base station refers to UE that uses a micro base station as a serving base station, and the micro base station is deployed in coverage of a macro cell of the macro base station.

Further, the processor 82 is specifically further configured to:
determine, by the macro base station, that a minimum quality indicator in the at least one third quality indicator is the second quality indicator threshold; or determine, by the macro base station, that a preset adjustment value added to a minimum quality indicator in the at least one third quality indicator is the second quality indicator threshold; or perform, by the macro base station, weighting on the at least one third quality indicator, to obtain the second quality indicator threshold; or perform, by the macro base station, weighting on the at least one third quality indicator, and add a preset adjustment value, to obtain the second quality indicator threshold.

The apparatus in this embodiment may be configured to execute the technical solution of the method embodiment shown in FIG. 5. An implementation principle of it is similar, and details are not described herein again.

By means of the macro base station provided in the embodiments shown in FIG. 12 and FIG. 13, a receiver in the macro base station receives configuration information sent by a network side, and receives a second quality indicator that is fed back by UE of the macro base station and that is of a channel from a serving cell of the UE of the macro base station to the UE of the macro base station, a processor preferentially schedules, according to configuration information in N RRS subframes in an RRS scheduling pattern, UE of the macro base station that a second quality indicator is less than a second quality indicator threshold, and the micro base station preferentially schedules, in the RRS subframes in the RRS scheduling pattern, the victim IC UE simultaneously. In this way, the victim IC UE of the micro base station is always scheduled in an interference environment that is more beneficial to interference cancellation, and thereby the IC efficiency of an interference cancellation receiver can be improved.

Further, by means of the micro base station and the macro base station that are provided in the embodiments shown in FIG. 12 and FIG. 13, a receiver in the macro base station receives configuration information sent by a network side, and receives a second quality indicator that is fed back by UE of the macro base station and that is of a channel from a serving cell of the UE of the macro base station to the UE of the macro base station; a processor preferentially schedules, according to configuration information in N RRS subframes in an RRS scheduling pattern, UE of the macro base station that a second quality indicator is less than a second quality indicator threshold; a receiver in the micro base station simultaneously receives configuration information sent by the network side, and receives a first quality indicator that is fed back by UE of the micro base station and that is of a channel from an interfering cell of the UE of the micro base station to the UE of the micro base station; and a processor preferentially schedules, according to the configuration information sent by the network side, in the N RRS subframes in the RRS scheduling pattern, UE that is of the micro base station and whose first quality indicator is greater than a first quality indicator threshold. In this way, the micro base station preferentially schedules, in the RRS subframes, victim IC UE whose paired scheduling gain is higher, and thereby the IC efficiency of the interference cancellation receiver can be improved.

A communications system provided in an embodiment includes the user equipment shown in FIG. 10 and the base station shown in FIG. 11; or includes the user equipment shown in FIG. 10, the macro base station shown in FIG. 13, and a micro base station that supports the RRS scheduling pattern; or includes the user equipment shown in FIG. 10, the micro base station shown in FIG. 12, and the macro base station shown in FIG. 13.

In the several embodiments provided in the present invention, it should be understood that the disclosed apparatus and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) or a processor to perform a part of the steps of the methods described in the embodiments of the present invention. The foregoing storage medium includes: any medium that can store program code, such as a USB flash drive, a removable hard disk, a read-only memory (ROM), a random access memory (RAM), a magnetic disk, or an optical disc.

It may be clearly understood by a person skilled in the art that, for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or part of the functions described above. For a detailed working process of the foregoing apparatus, reference may be made to a corresponding process in the foregoing method embodiments, and details are not described herein again.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments, without departing from the scope of the technical solutions of the embodiments of the present invention.

**Claims**

1. A method, being carried out by a user equipment, UE, for coordinated scheduling based on interference cancellation, comprising:

   - generating (S101) a first quality indicator of a channel from an interfering cell of the UE to the UE; and
   - feeding back (S102) the first quality indicator to a first base station to which the interfering cell of the UE belongs, and/or feeding back the first quality indicator to a second base station to which a serving cell of the UE belongs, to enable the first base station and/or the second base station to select, according to the first quality indicator, an interfering UE that is to be scheduled together with the UE, schedule, in the serving cell of the UE, the UE, and simultaneously schedule, in a serving cell of the interfering UE, the interfering UE;

   wherein the interfering cell of the UE and the serving cell of the UE belong to a same base station, or belong to two different base stations;
   wherein the serving cell of the interfering UE is the interfering cell of the UE, and the interfering UE refers to that a signal transmitted by the serving cell of the interfering UE interferes with the UE;
   wherein the first quality indicator comprises:

   a signal-to-noise ratio SNR; or
   a channel quality indicator CQI; or
   a transport block size TBS that enables a channel to support demodulation and decoding;

   wherein the generating a first quality indicator of a channel from an interfering cell of the UE to the UE comprises:
   performing, by the UE, estimation according to a pilot channel of the interfering cell, to obtain the first quality indicator.

2. The method according to claim 1, wherein the first base station and the second base station are a same base station; or the first base station and the second base station are connected to each other by using a low-delay link; or the first base station is a macro base station, and the second base station is a micro base station.

3. A method, being carried out by a base station, for coordinated scheduling based on interference cancellation, comprising:

- receiving (S103) a first quality indicator that is fed back by user equipment UE and that is of a channel from an interfering cell of the UE to the UE;
- selecting (S103) according to the first quality indicator, an interfering UE that is to be scheduled together with the UE; and
- scheduling (S104) in a serving cell of the UE, the UE, and simultaneously scheduling, in a serving cell of the interfering UE, the interfering UE;

wherein the interfering cell of the UE and the serving cell of the UE belong to a same base station, or belong to two different base stations;
wherein the serving cell of the interfering UE is the interfering cell of the UE, and the interfering UE refers to that a signal transmitted by the serving cell of the interfering UE interferes with the UE;
wherein the first quality indicator comprises:

a signal-to-noise ratio SNR; or
a channel quality indicator CQI; or
a transport block size TBS that enables a channel to support demodulation and decoding.

4. The method according to claim 3, wherein before the selecting, by the base station according to the first quality indicator, interfering UE that is to be scheduled together with the UE, the method further comprises:

receiving, by the base station, second quality indicators that are fed back by multiple interfering UEs and that are of channels from a serving cell of the multiple interfering UEs to the interfering UEs; and
the selecting, by the base station according to the first quality indicator, interfering UE that is to be scheduled together with the UE comprises:
selecting, by the base station according to the received first quality indicator and the second quality indicators that are fed back by the multiple interfering UEs, the interfering UE that meets the following formula (1):

$$\text{the second quality indicator} \leq \text{the first quality indicator} + \text{DELTA} \,(1),$$

wherein
the DELTA is a parameter that is preset in a protocol or that is notified by the base station.

5. User equipment, comprising:

a generation module (11), configured to generate a first quality indicator of a channel from an interfering cell of the UE to the UE; and
a sending module (12), configured to feed back the first quality indicator generated by the generation module to a first base station to which the interfering cell of the UE belongs, and/or feed back the first quality indicator to a second base station to which a serving cell of the UE belongs, to enable the first base station and/or the second base station to select, according to the first quality indicator, an interfering UE that is to be scheduled together with the UE, schedule, in the serving cell of the UE, the UE, and simultaneously schedule, in a serving cell of the interfering UE, the interfering UE;
wherein the interfering cell of the UE and the serving cell of the UE belong to a same base station, or belong to two different base stations;
wherein the serving cell of the interfering UE is the interfering cell of the UE, and the interfering UE refers to that a signal transmitted by the serving cell of the interfering UE interferes with the UE;
wherein the first quality indicator comprises:

a signal-to-noise ratio SNR; or
a channel quality indicator CQI; or
a transport block size TBS that enables a channel to support demodulation and decoding;
wherein the generation module is specifically configured to:
perform estimation according to a pilot channel of the interfering cell, to obtain the first quality indicator.

6. The user equipment according to claim 5, wherein the first base station and the second base station are a same base station; or
the first base station and the second base station are connected to each other by using a low-delay link; or
the first base station is a macro base station, and the second base station is a micro base station.

7. A base station, comprising:

a receiving module (21), configured to receive a first quality indicator that is fed back by user equipment UE and that is of a channel from an interfering cell of the UE to the UE;
a selection module (22), configured to select, according to the first quality indicator received by the receiving module, an interfering UE that is to be scheduled together with the UE; and
a processing module (23), configured to schedule, in a serving cell of the UE, the UE, and simultaneously schedule, in a serving cell of the interfering UE, the interfering UE selected by the selection module, wherein the interfering cell of the UE and the serving cell of the UE belong to a same base station, or belong to two different base stations, wherein
the serving cell of the interfering UE is the interfering cell of the UE, and the interfering UE refers to that a signal transmitted by the serving cell of the interfering UE interferes with the UE;
wherein the first quality indicator comprises:

a signal-to-noise ratio SNR; or
a channel quality indicator CQI; or
a transport block size TBS that enables a channel to support demodulation and decoding.

8. The base station according to claim 7, wherein the receiving module is further configured to:

before the selection module selects, according to the first quality indicator, the interfering UE that is to be scheduled together with the UE, receive second quality indicators that are fed back by multiple interfering UEs and that are of channels from a serving cell of the multiple interfering UEs to the interfering UEs; and
the selection module is specifically configured to:
select, according to the received first quality indicator and the second quality indicators that are fed back by the multiple interfering UEs, the interfering UE that meets the following formula (1):

$$\text{the second quality indicator} \leq \text{the first quality indicator} + \text{DELTA} \ (1),$$

wherein
the DELTA is a parameter that is preset in a protocol or that is notified by the base station.

9. A communications system, comprising the user equipment according to claim 5 or 6 and the base station according to claim 7 or 8.

**Patentansprüche**

1. Von einem Benutzerendgerät, UE, ausgeführtes Verfahren zum koordinierten Planen auf der Basis von Interferenzunterdrückung, das Folgendes umfasst:

- Erzeugen (S101) eines ersten Qualitätsindikators eines Kanals von einer interferierenden Zelle des UE zum UE; und
- Rückmelden (S102) des ersten Qualitätsindikators an eine erste Basisstation, zu der die interferierende Zelle des UE gehört, und/oder Rückmelden des ersten Qualitätsindikators an eine zweite Basisstation, zu der eine "Serving Cell" des UE gehört, um der ersten Basisstation und/oder der zweiten Basisstation zu ermöglichen, gemäß dem ersten Qualitätsindikator ein interferierendes UE auszuwählen, das zusammen mit dem UE geplant werden soll, Planen des UE in der "Serving Cell" des UE und gleichzeitig Planen des interferierenden UE in einer "Serving Cell" des interferierenden UE;

wobei die interferierende Zelle des UE und die "Serving Cell" des UE zu derselben Basisstation oder zu zwei unterschiedlichen Basisstationen gehören;

wobei die "Serving Cell" des interferierenden UE die interferierende Zelle des UE ist und das interferierende UE sich darauf bezieht, dass ein von der "Serving Cell" des interferierenden UE übertragenes Signal mit dem UE interferiert;

wobei der erste Qualitätsindikator Folgendes umfasst:

ein Signal-Rausch-Verhältnis SNR; oder

einen Kanalqualitätsindikator "Channel Quality Indicator", CQI; oder

eine Transportblockgröße TBS, die es einem Kanal ermöglicht, Demodulation und

Decodierung zu unterstützen;

wobei das Erzeugen eines ersten Qualitätsindikators eines Kanals von einer interferierenden Zelle des UE zum UE Folgendes umfasst:

Durchführen einer Schätzung durch das UE gemäß einem Pilotkanal der interferierenden Zelle, um den ersten Qualitätsindikator zu erhalten.

2. Verfahren nach Anspruch 1, wobei die erste Basisstation und die zweite Basisstation dieselbe Basisstation sind; oder die erste Basisstation und die zweite Basisstation unter Verwendung einer Verbindung mit niedriger Verzögerung miteinander verbunden sind; oder

die erste Basisstation eine Makrobasisstation ist und die zweite Basisstation eine Mikrobasisstation ist.

3. Von einer Basisstation ausgeführtes Verfahren zum koordinierten Planen auf der Basis von Interferenzunterdrückung, das Folgendes umfasst:

- Empfangen (S103) eines ersten Qualitätsindikators, der von einem Benutzerendgerät UE rückgemeldet wird und von einem Kanal von einer interferierenden Zelle des UE zum UE stammt;

- Auswählen (S103) eines interferierenden UE, das zusammen mit dem UE zu planen ist, gemäß dem ersten Qualitätsindikator; und

- Planen (S104) des UE in einer "Serving Cell" des UE und gleichzeitig Planen des interferierenden UE in einer "Serving Cell" des interferierenden UE;

wobei die interferierende Zelle des UE und die "Serving Cell" des UE zu derselben Basisstation oder zu zwei unterschiedlichen Basisstationen gehören;

wobei die "Serving Cell" des interferierenden UE die interferierende Zelle des UE ist und das interferierende UE sich darauf bezieht, dass ein von der "Serving Cell" des interferierenden UE übertragenes Signal mit dem UE interferiert;

wobei der erste Qualitätsindikator Folgendes umfasst:

ein Signal-Rausch-Verhältnis SNR; oder

einen Kanalqualitätsindikator "Channel Quality Indicator", CQI; oder

eine Transportblockgröße TBS, die es einem Kanal ermöglicht, Demodulation und Decodierung zu unterstützen.

4. Verfahren nach Anspruch 3, wobei vor dem Auswählen des interferierenden UE, das zusammen mit dem UE geplant werden soll, durch die Basisstation gemäß dem ersten Qualitätsindikator das Verfahren darüber hinaus Folgendes umfasst:

Empfangen von zweiten Qualitätsindikatoren, die von mehreren interferierenden UEs rückgemeldet werden und die von Kanälen von einer "Serving Cell" der mehreren interferierenden UEs zu den interferierenden UEs stammen, durch die Basisstation; und

wobei das Auswählen des interferierenden UE, das zusammen mit dem UE geplant werden soll, durch die Basisstation gemäß dem ersten Qualitätsindikator Folgendes umfasst:

Auswählen des interferierenden UE, das der folgenden Formel (1) entspricht, durch die Basisstation gemäß dem empfangenen ersten Qualitätsindikator und den zweiten Qualitätsindikatoren, die von den mehreren interferierenden UEs rückgemeldet werden:

$$\text{zweiter Qualitätsindikator} \leq \text{erster Qualitätsindikator} + \text{DELTA} \quad (1),$$

wobei

DELTA ein Parameter ist, der in einem Protokoll voreingestellt oder von der Basisstation mitgeteilt wird.

5. Benutzerendgerät, das Folgendes umfasst:

- ein Erzeugungsmodul (11), konfiguriert zum Erzeugen eines ersten Qualitätsindikators eines Kanals von einer interferierenden Zelle des UE zum UE; und

- ein Sendemodul (12), konfiguriert zum Rückmelden des ersten von Erzeugungsmodul erzeugten Qualitätsindikators an eine erste Basisstation, zu der die interferierende Zelle des UE gehört, und/oder Rückmelden des ersten Qualitätsindikators an eine zweite Basisstation, zu der eine "Serving Cell" des UE gehört, um der ersten Basisstation und/oder der zweiten Basisstation zu ermöglichen, gemäß dem ersten Qualitätsindikator ein interferierendes UE auszuwählen, das zusammen mit dem UE geplant werden soll, Planen des UE in der "Serving Cell" des UE und gleichzeitig Planen des interferierenden UE in einer "Serving Cell" des interferierenden UE;

wobei die interferierende Zelle des UE und die "Serving Cell" des UE zu derselben Basisstation oder zu zwei unterschiedlichen Basisstationen gehören;

wobei die "Serving Cell" des interferierenden UE die interferierende Zelle des UE ist und das interferierende UE sich darauf bezieht, dass ein von der "Serving Cell" des interferierenden UE übertragenes Signal mit dem UE interferiert;

wobei der erste Qualitätsindikator Folgendes umfasst:

ein Signal-Rausch-Verhältnis SNR; oder

einen Kanalqualitätsindikator "Channel Quality Indicator", CQI; oder

eine Transportblockgröße TBS, die es einem Kanal ermöglicht, Demodulation und Decodierung zu unterstützen;

wobei das Erzeugungsmodul speziell konfiguriert ist zum:

Durchführen einer Schätzung gemäß einem Pilotkanal der interferierenden Zelle, um den ersten Qualitätsindikator zu erhalten.

6. Benutzerendgerät nach Anspruch 5, wobei die erste Basisstation und die zweite Basisstation dieselbe Basisstation sind; oder

die erste Basisstation und die zweite Basisstation unter Verwendung einer Verbindung mit niedriger Verzögerung miteinander verbunden sind; oder

die erste Basisstation eine Makrobasisstation ist und die zweite Basisstation eine Mikrobasisstation ist.

7. Basisstation, die Folgendes umfasst:

- ein Empfangsmodul (21), konfiguriert zum Empfangen eines ersten Qualitätsindikators, der von einem Benutzerendgerät UE rückgemeldet wird und von einem Kanal von einer interferierenden Zelle des UE zum UE stammt;

- ein Auswahlmodul (22), konfiguriert zum Auswählen eines interferierenden UE, das zusammen mit dem UE zu planen ist, gemäß dem ersten vom Empfangsmodul empfangenen Qualitätsindikator; und

- ein Verarbeitungsmodul (23), konfiguriert zum Planen des UE in einer "Serving Cell" des UE und gleichzeitig Planen des vom Auswahlmodul ausgewählten interferierenden UE in einer "Serving Cell" des interferierenden UE,

wobei die interferierende Zelle des UE und die "Serving Cell" des UE zu derselben Basisstation oder zu zwei unterschiedlichen Basisstationen gehören, wobei die "Serving Cell" des interferierenden UE die interferierende Zelle des UE ist und das interferierende UE sich darauf bezieht, dass ein von der "Serving Cell" des interferierenden UE übertragenes Signal mit dem UE interferiert;

wobei der erste Qualitätsindikator Folgendes umfasst:

ein Signal-Rausch-Verhältnis SNR; oder

einen Kanalqualitätsindikator "Channel Quality Indicator", CQI; oder

eine Transportblockgröße TBS, die es einem Kanal ermöglicht, Demodulation und Decodierung zu unterstützen.

8. Basisstation nach Anspruch 7, wobei das Empfangsmodul darüber hinaus konfiguriert ist zum:

Empfangen von zweiten Qualitätsindikatoren, die von mehreren interferierenden UEs rückgemeldet werden und die von Kanälen von einer "Serving Cell" der mehreren interferierenden UEs zu den interferierenden UEs stammen, bevor das Auswahlmodul gemäß dem ersten Qualitätsindikator das interferierende UE auswählt, das zusammen mit dem UE zu planen ist; und
das Auswahlmodul speziell konfiguriert ist zum:
Auswählen des interferierenden UE, das der folgenden Formel (1) entspricht, gemäß dem empfangenen ersten Qualitätsindikator und den zweiten Qualitätsindikatoren, die von den mehreren interferierenden UEs rückgemeldet werden:

$$\text{zweiter Qualitätsindikator} \leq \text{erster Qualitätsindikator} + \text{DELTA} \ (1),$$

wobei
DELTA ein Parameter ist, der in einem Protokoll voreingestellt oder von der Basisstation mitgeteilt wird.

9. Kommunikationssystem, das das Benutzerendgerät nach Anspruch 5 oder 6 und die Basisstation nach Anspruch 7 oder 8 umfasst.


**Revendications**

1. Procédé exécuté par un équipement d'utilisateur, UE, pour une programmation coordonnée basée sur une annulation d'interférences, consistant à :

- générer (S101) un premier indicateur de qualité d'un canal à partir d'une cellule interférente de l'UE vers l'UE ; et
- renvoyer (S102) le premier indicateur de qualité à une première station de base à laquelle la cellule interférente de l'UE appartient, et/ou renvoyer le premier indicateur de qualité à une seconde station de base à laquelle une cellule de desserte de l'UE appartient, pour activer la première station de base et/ou la seconde station de base afin de sélectionner, en fonction du premier indicateur de qualité, un UE interférent qui doit être programmé en même temps que l'UE, programmer l'UE dans la cellule de desserte de l'UE et programmer simultanément l'UE interférent dans une cellule de desserte de l'UE interférent ;

dans lequel la cellule interférente de l'UE et la cellule de desserte de l'UE appartiennent à une même station de base ou appartiennent à deux stations de base différentes ;
dans lequel la cellule de desserte de l'UE interférent est la cellule interférente de l'UE, et l'UE interférent renvoie au fait qu'un signal transmis par la cellule de desserte de l'UE interférent interfère avec l'UE ;
dans lequel le premier indicateur de qualité comprend :

un rapport signal-bruit, SNR ; ou
un indicateur de qualité de canal, CQI ; ou
une taille de bloc de transport, TBS, qui permet à un canal de prendre en charge une démodulation et un décodage ;
dans lequel la génération d'un premier indicateur de qualité d'un canal à partir d'une cellule interférente de l'UE vers l'UE consiste à :
effectuer, par l'UE, une estimation en fonction d'un canal pilote de la cellule interférente afin d'obtenir le premier indicateur de qualité.

2. Procédé selon la revendication 1, dans lequel la première station de base et la seconde station de base sont une même station de base ; ou
la première station de base et la seconde station de base sont connectées l'une à l'autre en utilisant une liaison à faible retard ; ou
la première station de base est une macro-station de base et la seconde station de base est une micro-station de base.

3. Procédé exécuté par une station de base pour une programmation coordonnée basée sur une annulation d'interférences, consistant à :

- recevoir (S103) un premier indicateur de qualité qui est renvoyé par un équipement d'utilisateur, UE, et qui appartient à un canal depuis une cellule interférente de l'UE vers l'UE ;
- sélectionner (S103) en fonction du premier indicateur de qualité, un UE interférent qui doit être programmé en même temps que l'UE ; et

- programmer (S104) l'UE dans une cellule de desserte de l'UE et programmer simultanément l'UE interférent dans une cellule de desserte de l'UE interfèrent ;

dans lequel la cellule interférente de l'UE et la cellule de desserte de l'UE appartiennent à une même station de base ou appartiennent à deux stations de base différentes ;

dans lequel la cellule de desserte de l'UE interférent est la cellule interférente de l'UE, et l'UE interférent renvoie au fait qu'un signal transmis par la cellule de desserte de l'UE interférent interfère avec l'UE ;

dans lequel le premier indicateur de qualité comprend :

un rapport signal-bruit, SNR ; ou
un indicateur de qualité de canal, CQI ; ou
une taille de bloc de transport, TBS, qui permet à un canal de prendre en charge une démodulation et un décodage.

4. Procédé selon la revendication 3, avant de sélectionner, par la station de base en fonction du premier indicateur de qualité, l'UE interférent qui doit être programmé en même temps que l'UE, le procédé consistant en outre à :

recevoir, par la station de base, des seconds indicateurs de qualité qui sont renvoyés par de multiples UE interférents et qui appartiennent à des canaux depuis une cellule de desserte des multiples UE interférents vers les UE interférents ; et

la sélection par la station de base, en fonction du premier indicateur de qualité, de l'UE interférent qui doit être programmé en même temps que l'UE, consiste à :

sélectionner, par la station de base en fonction du premier indicateur de qualité reçu et des seconds indicateurs de qualité qui sont renvoyés par les multiples UE interférents, l'UE interférent qui correspond à la formule (1) suivante :

$$\text{le second indicateur de qualité} \leq \text{le premier indicateur de qualité} + \text{DELTA (1)},$$

où
le DELTA est un paramètre qui est prédéfini dans un protocole ou qui est notifié par la station de base.

5. Équipement d'utilisateur comprenant :

un module de génération (11) conçu pour générer un premier indicateur de qualité d'un canal à partir d'une cellule interférente de l'UE vers l'UE; et

un module d'envoi (12) conçu pour renvoyer le premier indicateur de qualité généré par le module de génération à une première station de base à laquelle la cellule interférente de l'UE appartient, et/ou renvoyer le premier indicateur de qualité à une seconde station de base à laquelle une cellule de desserte de l'UE appartient, pour activer la première station de base et/ou la seconde station de base afin de sélectionner, en fonction du premier indicateur de qualité, un UE interférent qui doit être programmé en même temps que l'UE, programmer l'UE dans la cellule de desserte de l'UE et programmer simultanément l'UE interférent dans une cellule de desserte de l'UE interfèrent ;

dans lequel la cellule interférente de l'UE et la cellule de desserte de l'UE appartiennent à une même station de base ou appartiennent à deux stations de base différentes ;

dans lequel la cellule de desserte de l'UE interférent est la cellule interférente de l'UE, et l'UE interférent renvoie au fait qu'un signal transmis par la cellule de desserte de l'UE interférent interfère avec l'UE ;

dans lequel le premier indicateur de qualité comprend :

un rapport signal-bruit, SNR ; ou
un indicateur de qualité de canal, CQI ; ou
une taille de bloc de transport, TBS, qui permet à un canal de prendre en charge une démodulation et un décodage ;
dans lequel le module de génération est spécifiquement conçu pour :
effectuer une estimation en fonction d'un canal pilote de la cellule interférente afin d'obtenir le premier indicateur de qualité.

**6.** Équipement d'utilisateur selon la revendication 5, dans lequel la première station de base et la seconde station de base sont une même station de base ; ou
la première station de base et la seconde station de base sont connectées l'une à l'autre en utilisant une liaison à faible retard ; ou
la première station de base est une macro-station de base et la seconde station de base est une micro-station de base.

**7.** Station de base comprenant :

un module de réception (21) conçu pour recevoir un premier indicateur de qualité qui est renvoyé par un équipement d'utilisateur, UE, et qui appartient à un canal depuis une cellule interférente de l'UE vers l'UE ;
un module de sélection (22) conçu pour sélectionner, en fonction du premier indicateur de qualité reçu par le module de réception, un UE interférent qui doit être programmé en même temps que l'UE ; et
un module de traitement (23) conçu pour programmer l'UE dans une cellule de desserte de l'UE et programmer simultanément, dans une cellule de desserte de l'UE interférent, l'UE interférent sélectionné par le module de sélection ; dans laquelle la cellule interférente de l'UE et la cellule de desserte de l'UE appartiennent à une même station de base ou appartiennent à deux stations de base différentes ; dans laquelle
la cellule de desserte de l'UE interférent est la cellule interférente de l'UE, et l'UE interférent renvoie au fait qu'un signal transmis par la cellule de desserte de l'UE interférent interfère avec l'UE ;
dans laquelle le premier indicateur de qualité comprend :

un rapport signal-bruit, SNR ; ou
un indicateur de qualité de canal, CQI ; ou
une taille de bloc de transport, TBS, qui permet à un canal de prendre en charge une démodulation et un décodage.

**8.** Station de base selon la revendication 7, dans laquelle le module de réception est en outre conçu pour :

avant que le module de sélection sélectionne, en fonction du premier indicateur de qualité, l'UE interférent qui doit être programmé en même temps que l'UE, recevoir des seconds indicateurs de qualité qui sont renvoyés par de multiples UE interférents et qui appartiennent à des canaux depuis une cellule de desserte des multiples UE interférents vers les UE interférents ; et
le module de sélection est spécifiquement conçu pour :
sélectionner, en fonction du premier indicateur de qualité reçu et des seconds indicateurs de qualité qui sont renvoyés par les multiples UE interférents, l'UE interférent qui correspond à la formule (1) suivante :

$$\text{le second indicateur de qualité} \leq \text{le premier indicateur de qualité} + \text{DELTA (1)},$$

où
le DELTA est un paramètre qui est prédéfini dans un protocole ou qui est notifié par la station de base.

**9.** Système de communications comprenant l'équipement d'utilisateur selon la revendication 5 ou 6 et la station de base selon la revendication 7 ou 8.

FIG. 1

Cell$_{1,2}$

Cell$_{1,1}$

NodeB1

Interfering_UE1

Cell$_{1,3}$

Interfering_UE2

Victim IC UE  LPN

FIG. 2

| | |
|---|---|
| UE generates a first quality indicator of a channel from an interfering cell of the UE to the UE | S101 |

↓

| | |
|---|---|
| The UE feeds back the first quality indicator to a first base station to which the interfering cell belongs, and/or feeds back the first quality indicator to a second base station to which a serving cell of the UE belongs | S102 |

↓

| | |
|---|---|
| After receiving the first quality indicator fed back by the victim IC UE, the first base station selects, according to the first quality indicator, interfering UE that is to be scheduled together with the victim IC UE | S103 |

↓

| | |
|---|---|
| The second base station schedules, in the serving cell of the victim IC UE, the victim IC UE, and the first base station simultaneously schedules, in a serving cell of the interfering UE, the interfering UE | S104 |

FIG. 3

| | |
|---|---|
| UE generates a first quality indicator of a channel from an interfering cell of the UE to the UE | S201 |

↓

| | |
|---|---|
| The UE feeds back the first quality indicator to a first base station to which the interfering cell belongs, and/or feeds back the first quality indicator to a second base station to which a serving cell of the UE belongs | S202 |

↓

| | |
|---|---|
| A micro base station receives configuration information sent by a network side, where the configuration information includes an RRS | S203 |

↓

| | |
|---|---|
| The micro base station receives the first quality indicator of the channel from the interfering cell of the UE of the micro base station to the UE of the micro base station that is fed back by the UE of the micro base station | S204 |

↓

| | |
|---|---|
| The micro base station schedules, in N RRS subframes in the RRS scheduling pattern, the victim IC UE of the micro base station according to the configuration information | S205 |

FIG. 4

A macro base station receives configuration information sent by a network side, where the configuration information includes an RRS and a second quality indicator threshold ⟶ S206

The macro base station receives a second quality indicator of a channel from a serving cell of UE of the macro base station to the UE of the macro base station that is fed back by the UE of the macro base station ⟶ S207

The macro base station preferentially schedules, in N RRS subframes in the RRS according to the configuration information, UE that is of the macro base station and whose second quality indicator is less than the second quality indicator threshold ⟶ S208

FIG. 5

```
    11              12
┌────────────┐  ┌────────────┐
│ Generation │  │  Sending   │
│  module    │  │  module    │
└────────────┘  └────────────┘
```

FIG. 6

```
    21              22              23
┌────────────┐  ┌────────────┐  ┌────────────┐
│ Receiving  │  │ Selection  │  │ Processing │
│  module    │  │  module    │  │  module    │
└────────────┘  └────────────┘  └────────────┘
```

FIG. 7

```
    31              32
┌────────────┐  ┌────────────┐
│ Receiving  │  │ Processing │
│  module    │  │  module    │
└────────────┘  └────────────┘
```

FIG. 8

41 42

| Receiving module | Processing module |

FIG. 9

51 52

| Processor | Transmitter |

FIG. 10

61 62

| Receiver | Processor |

FIG. 11

71 72

| Receiver | Processor |

FIG. 12

81 82

| Receiver | Processor |

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012026955 A